# FASCICULE DE BREVET EUROPEEN

(11) **EP 3 592 575 B1**
(45) Date de publication et mention de la délivrance du brevet: **21.07.2021**
(21) Numéro de dépôt: 18714823.4
(22) Date de dépôt: 09.03.2018
(51) Int. Cl.: B60C 11/00

(54) **PNEUMATIQUE COMPORTANT UNE BANDE DE ROULEMENT CONSTITUEE DE PLUSIEURS MELANGES ELASTOMERIQUES**
REIFEN MIT EINER LAUFFLÄCHE AUS MEHREREN ELASTOMERMISCHUNGEN
TYRE COMPRISING A TREAD FORMED BY MULTIPLE ELASTOMER BLENDS

(30) Priorité: 10.03.2017 FR 1751968
(43) Date de publication de la demande: 15.01.2020
(73) Titulaire: COMPAGNIE GENERALE DES ETABLISSEMENTS MICHELIN, 63000 Clermont-Ferrand (FR)
(72) Inventeur: FOURNIER, Orel, 63040 Clermont-Ferrand Cedex 9 (FR); GUERBERT-JUBERT, Jean-Luc, 63040 Clermont-Ferrand Cedex 9 (FR); LAFORT, François, 63040 Clermont-Ferrand Cedex 9 (FR)
(74) Mandataire: Le Cam, Stéphane Georges Elie
(86) Numéro de dépôt international: PCT/FR2018/050548
(87) Numéro de publication internationale: WO 2018/162863

(56) Documents cités:
- EP-A1- 2 522 530
- US-A- 5 046 542
- US-A1- 2014 000 773

## Description

La présente invention concerne un pneumatique, plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux élastomériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuel de choisir des matériaux élastomériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Le document US 2014/000773 A1 décrit encore un pneumatique dont la bande de roulement est constituée de deux couches de matériaux, la couche radialement la plus intérieure comportant une partie centrale et deux parties axialement extérieures. Ce document a pour but de concilier les propriétés décrites par le document précédent avec une meilleure manœuvrabilité.

Les propriétés d'endurance des pneumatiques peuvent encore être altérées du fait de perforations de la bande de roulement apparaissant lors de roulage du fait de cailloux ou d'autres objets pouvant venir agresser la bande de roulement. Ces perforations peuvent conduire à une dégradation des éléments de renforcement de l'armature sommet par oxydation, rendant ainsi le pneumatique non rechapable. Dans des cas d'endommagement par oxydation importants, la dégradation des éléments de renforcement peut nécessiter un changement de pneumatique sur le véhicule avant l'usure complète de la bande de roulement.

Il est notamment connu pour éviter les risques d'altération des couches de travail de prévoir une couche de protection telle que décrite précédemment, celle-ci jouant un rôle sacrificiel en cas d'agression de type perforation ou agression de la bande de roulement et permettant un éventuel rechapage, l'armature sommet étant par ailleurs préservée.

Ces solutions n'empêchent pas les perforations et peuvent ne pas être suffisantes, dans certaines conditions de roulage particulièrement sévères, pour préserver l'intégrité de l'ensemble de l'armature sommet.

Les inventeurs se sont ainsi donnés pour mission de proposer des pneumatiques autorisant une distance de roulage toujours plus importante avant d'envisager un rechapage, dont les montées en température dans la zone du sommet sont limitées pour satisfaire les performances hystérétiques recherchées et dont les performances en termes de résistance aux perforations et aux agressions sont améliorées en comparaison de pneumatiques plus usuels.

Ce but a été atteint selon l'invention par un pneumatique, comprenant une armature de sommet comportant au moins une couche d'éléments de renforcement, elle-même coiffée radialement d'une bande de roulement dont la sculpture comporte au moins deux rainures circonférentielles, réunie à deux bourrelets par l'intermédiaire de deux flancs, ladite bande de roulement comprenant au moins deux couches de mélanges élastomériques radialement superposées, la première couche formant la partie radialement extérieure de la bande de roulement étant constituée d'un premier mélange élastomérique présentant un module d'élasticité sous tension à 10 % d'allongement inférieur ou égal à 10 MPa, ladite première couche étant présente radialement à l'intérieur desdites au moins deux rainures sur une épaisseur mesurée selon la direction radiale supérieure ou égale à 1 mm, une deuxième couche radialement intérieure et au contact de ladite première couche étant constituée d'une partie centrale et de deux parties axialement extérieures, ladite partie centrale présentant une largeur axiale comprise entre les extrémités de ladite au moins une couche d'éléments de renforcement de l'armature de sommet, ladite partie centrale étant constituée, au moins localement radialement à l'intérieur desdites au moins deux rainures d'un deuxième mélange élastomérique présentant un module d'élasticité sous tension à 10 % d'allongement supérieur ou égal à 20 MPa, le deuxième mélange élastomérique présentant une valeur maximale de tan(δ), noté tan(δ)max, inférieure ou égale à 0.30, l'épaisseur mesurée selon la direction radiale de ladite partie centrale étant supérieure ou égale à 1 mm radialement à l'intérieur desdites au moins deux rainures, et lesdites deux parties axialement extérieures de la deuxième couche étant constituées d'un troisième mélange élastomérique présentant une valeur maximale de tan(δ), noté tan(δ)max, inférieure à 0.10.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour). Les résultats exploités sont le module complexe de cisaillement dynamique (G^{*}) et le facteur de perte tan(δ) mesuré sur le cycle retour. Pour le cycle retour, on indique la valeur maximale de tan(δ) observée, noté tan(δ)ₘₐₓ.

Dans le cas où l'épaisseur du matériau est comprise entre 1 et 2mm, le facteur de perte tan(δ) est mesuré selon la même méthode et dans les mêmes conditions, telles que décrites précédemment, sur un échantillon de composition vulcanisée qui se présente sous la forme d'une éprouvette cylindrique de 1 mm d'épaisseur et de 78 mm2 de section.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la résistance au roulement du pneumatique en roulage.

L'invention vise plus particulièrement des pneumatiques à armature de carcasse radiale.

Les essais réalisés avec des pneumatiques conformes à l'invention ont mis en évidence que les pneumatiques présentent des performances en termes d'usure, de résistance au roulement et d'endurance satisfaisantes et notamment dont les performances en termes de résistance aux perforations et aux agressions sont améliorées en comparaison de pneumatiques plus usuels.

Les inventeurs ont tout d'abord su mettre en évidence que la combinaison des différents mélanges élastomériques tels que décrits précédemment permet de conduire à un compromis entre les propriétés de résistance à l'usure et les montées en température au niveau du sommet du pneumatique satisfaisant pour les usages routiers tels que décrits précédemment. En effet, la combinaison des différents mélanges telle que décrite permet de diminuer l'hystérèse globale du pneumatique, les mélanges élastomériques de la deuxième couche radialement la plus intérieure compensant les propriétés hystérétiques élevées du mélange radialement le plus extérieur. En effet, le mélange radialement le plus extérieur choisi par exemple pour ses propriétés de rigidité conduisant à des performances en matière d'usure élevées favorise les montées en température de la bande de roulement. Les inventeurs ont encore mis en évidence que le choix du matériau de la partie centrale de la deuxième couche dont les propriétés hystérétiques ne sont pourtant pas favorables n'est pas pénalisant pour ce qui est des montées en température car la partie centrale de la deuxième couche subit peu de déformations lors des roulages.

Le mélange élastomérique constituant la partie centrale de la deuxième couche présente par contre des propriétés de rigidité que les inventeurs pensent favorables aux performances en termes de résistance à la perforation. Les inventeurs ont encore mis en évidence que la présence de la première couche radialement à l'intérieur des rainures sur une épaisseur radiale d'au moins 1 mm permet de limiter les risques d'apparition et la propagation de fissures dans la partie radialement intérieure des rainures du fait de la rigidité importante de la partie centrale de la deuxième couche. Dans le cas contraire, de telles fissures pourraient être la cause d'amorces d'arrachements d'une ou plusieurs parties de la bande de roulement délimitée par ces rainures.

Les inventeurs ont ainsi su mettre en évidence que la présence de la partie centrale de la deuxième couche dont l'épaisseur est d'au moins 1 mm permet de contribuer à la protection de l'armature sommet au regard des risques de perforations et d'agressions plus particulièrement importants en fond de rainures, sans pour autant risquer de générer des risques d'arrachement d'une partie de la bande de roulement du fait de la présence de la première couche sur une épaisseur radiale d'au moins 1 mm radialement à l'intérieur desdites rainures.

Selon un mode de réalisation préféré de l'invention, la première couche formant la partie radialement extérieure de la bande de roulement présente, radialement à l'intérieur desdites au moins deux rainures, une épaisseur mesurée selon la direction radiale supérieure ou égale à 2 mm.

De préférence également selon l'invention, afin de lutter encore mieux contre les risques liés aux agressions par perforation de la bande de roulement, le deuxième mélange élastomérique présente un module d'élasticité sous tension à 10 % d'allongement supérieur ou égal à 28 MPa.

Bien que les inventeurs aient mis en évidence que la partie centrale de la deuxième couche est peu sollicité en termes de déformation, le deuxième mélange élastomérique présente avantageusement une valeur maximale de tan(δ), noté tan(δ)max, inférieure ou égale à 0.20.

Selon une variante de réalisation de l'invention, la partie centrale de ladite deuxième couche de la bande de roulement est totalement constituée du deuxième mélange élastomérique.

Avantageusement encore selon l'invention pour d'encore meilleures performances en termes de résistance aux perforations et aux agressions , l'épaisseur mesurée selon la direction radiale de ladite partie centrale de ladite deuxième couche de la bande de roulement est supérieure ou égale à 2 mm radialement à l'intérieur desdites au moins deux rainures.

Selon une variante de réalisation de l'invention, selon laquelle, l'armature de sommet comporte au moins deux couches d'éléments de renforcement, couplées sur au moins une partie de leur longueur selon la direction axiale, ladite partie centrale présente une largeur axiale comprise entre les extrémités de la zone de couplage de la couche d'éléments de renforcement axialement la plus étroite et avantageusement au plus égale à la largeur axiale de la zone de couplage.

Au sens de l'invention, des couches d'éléments de renforcement d'armature de sommet sont dites couplées si les éléments de renforcement respectifs de chacune des couches sont séparés radialement d'au plus 1,5 mm, ladite épaisseur de caoutchouc étant mesurée radialement entre les génératrices respectivement supérieure et inférieure desdits éléments de renforcement de chacune des couches.

Les inventeurs ont encore su mettre en évidence qu'en présence de deux couches de travail couplés sur une certaine largeur axiale et dont les extrémités sont découplées notamment pour permettre d'absorber les contraintes de cisaillement entre les extrémités des deux couches de travail, il est préférable que la partie centrale de la deuxième couche et plus précisément le deuxième mélange élastomérique ne soit pas présent dans la zone de découplage pour éviter de trop fortes élévations de température.

Selon un mode de réalisation de l'invention, l'armature de sommet du pneumatique est formée d'au moins deux couches de sommet de travail d'éléments de renforcement, de préférence inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Avantageusement selon ces autres modes de réalisation de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et avantageusement de même sens que celui de l'angle formé par les éléments de renforcement de la couche radialement la plus proche de l'armature de carcasse.

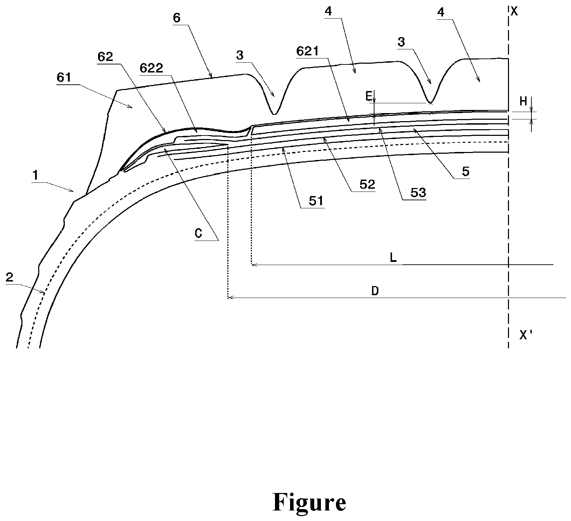

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 12 R 22.5, comprend une armature de carcasse radiale 2 ancrée dans deux bourrelets, autour de tringles, non représentées sur la figure. L'armature de carcasse 2 est formée d'une seule couche de câbles métalliques. L'armature de carcasse 2 est frettée par une armature de sommet 5, elle-même coiffée d'une bande de roulement 6. La bande de roulement comporte quatre rainures 3 formant cinq ribs 4.

Les zones basses et bourrelets du pneumatique 1 ne sont notamment pas représentés sur la figure.

Sur la figure, l'armature de sommet 5 est formée radialement de l'intérieur à l'extérieur :
- d'une couche de triangulation 51 formée de câbles métalliques inextensibles 9.28 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 26°, et
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail.

Les couches de travail 52 et 53 sont couplées sur une largeur axiale D égale à 148 mm et sont découplées à leurs extrémités par une couche C permettant de limiter les risques liées au cisaillement.

Conformément à l'invention, la bande de roulement 6 est constituée d'une première couche 61, constituée d'un premier mélange élastomérique, radialement extérieure et qui vient au contact du sol lors d'un roulage.

L'épaisseur H de ladite première couche 61 mesurée selon la direction radiale, radialement à l'intérieur d'une rainure 3 est égale à 3.5 mm et donc supérieure à 1 mm.

Radialement à l'intérieur de la première couche 61, une deuxième couche 62 est constituée d'une partie centrale 621 et de deux parties axialement extérieures 622. La partie centrale 621 est constituée d'un deuxième mélange élastomérique et les parties axialement extérieures 622 sont constituées d'un troisième mélange 63.

La largeur axiale L de la partie centrale 621 de ladite deuxième couche 62 est égale à 144 mm et donc inférieure à la largeur axiale D.

L'épaisseur E de la partie centrale 621 de ladite deuxième couche 62 mesurée selon la direction radiale, radialement à l'intérieur d'une rainure 3, est égale à 2 mm et donc supérieure à 1 mm.

Le premier mélange élastomérique constitutif de la première couche 61 présente une valeur tan(δ)max égale à 0.15 Ce premier mélange élastomérique présente un module d'élasticité sous tension à 10 % d'allongement, noté Ma₁₀, égal à 6 MPa qui lui confère des propriétés en termes d'usure satisfaisant pour les applications visées.

Le deuxième mélange élastomérique 62 présente une valeur tan(δ)max égale à 0.20 et donc inférieure à 0.30. Ce deuxième mélange élastomérique 62 présente un module d'élasticité sous tension à 10 % d'allongement, noté Ma₁₀, égal à 30 MPa qui confère une rigidité telle que les performances en termes de résistance aux perforations et aux agressions de la bande de roulement sont améliorées.

Le troisième mélange élastomérique 63 présente une valeur maximale de tan(δ), noté tan(δ)max, égale à 0.05. Ce troisième mélange élastomérique 63 permet de contribuer aux moindres élévations de température de la bande de roulement du pneumatique.

Des pneumatiques ont été réalisés sur la base des trois mélanges élastomériques décrits ci-dessous avec certaines de leurs propriétés.

| | Mélange A | Mélange B | Mélange C |
|---|---|---|---|
| NR | 75 | 100 | 100 |
| BR | 25 | | |
| N234 | 50 | | |
| N326 | | 50 | |
| N683 | | | 45 |
| Resine formophenol | | 8 | |
| HMT3H | | 5 | |
| Anti Oxydant 6PPD | 2 | 2 | 2 |
| ACIDE STEARIQUE | 1.5 | 2 | 1.5 |
| ZNO | 2.5 | 3 | 2.5 |
| SOUFRE | 1 | 5 | 1.5 |
| Accélérateur (CBS) | 1 | 1 | 1.5 |
| MA₁₀ (MPa) | 6 | 30 | 4 |
| tan(δ)ₘₐₓ | 0.20 | 0.20 | 0.05 |

Les valeurs des constituants sont exprimées en pce (parties en poids pour cent parties d'élastomères).

Le premier pneumatique est un pneumatique de référence R réalisé selon une configuration correspondant à des réalisations usuelles telles que décrites précédemment constituée de deux couches radialement superposées, la couche radialement intérieure étant formée d'un seul mélange élastomérique. Il associe un mélange A présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique.

Un pneumatique T conforme à l'invention et tel que décrit sur la figure associe, pour former la bande de roulement, le mélange A qui forme la partie radialement extérieure et correspond à la première couche 61, le mélange B, qui correspond à la partie centrale de la deuxième couche 62 et le mélange C qui correspond aux parties axialement extérieures de la deuxième couche 62.

Pour effectuer une comparaison, des essais similaires sont effectués avec les deux pneumatiques.

Les premiers essais ont consisté à évaluer la distance parcourue par les pneumatiques avant d'effectuer un rechapage.

Les essais sont réalisés dans des conditions de charge et vitesse définis pour conduire à une usure de la bande de roulement du pneumatique de référence R autorisant son rechapage après un kilométrage, auquel on attribue la valeur 100, parcouru dans lesdites conditions de ce test. La performance en usure est évaluée sur un véhicule poids lourd lors de roulages sur route ouverte sur des parcours représentatifs des usages classiquement observés sur des véhicules poids lourd. Des valeurs inférieures à 100 expriment une performance en usure inférieure.

Les résultats obtenus sont présentés dans le tableau suivant :

| | Pneumatique R | Pneumatique T |
|---|---|---|
| Usure | 100 | 95 |

Ces résultats montrent que le pneumatique selon l'invention autorise un roulage sensiblement équivalent à celui du pneumatique de référence avant d'effectuer un rechapage.

D'autres essais ont consisté à effectuer un roulage de 10 000 km sur une piste recouverte de cailloux coupants puis à maintenir les pneumatiques dans une atmosphère oxydante pouvant conduire à une oxydation des éléments de renforcement métalliques des couches de travail. Les pneumatiques sont ensuite analysés pour dénombrer le nombre de perforations de la bande de roulement et le nombre de zones corrodées dans les couches de travail. Une base 100 est fixée pour le pneumatique de référence. Des valeurs inférieures à 100 expriment une performance meilleure en résistance aux perforations et aux agressions de la bande de roulement.

Les résultats obtenus sont présentés dans le tableau suivant :

| | Nombre de perforations | Nombre de zones corrodées |
|---|---|---|
| Pneumatique R | 100 | 100 |
| Pneumatique T | 40 | 57 |

Ces résultats mettent en évidence que les performances en termes de résistance aux perforations et aux agressions de la bande de roulement sont nettement améliorées.

## Revendications

1. Pneumatique (1) comprenant une armature de sommet (5) comportant au moins une couche d'éléments de renforcement (51, 52, 53), elle-même coiffée radialement d'une bande de roulement (6) dont la sculpture comporte au moins deux rainures circonférentielles (3), réunie à deux bourrelets par l'intermédiaire de deux flancs, ladite bande de roulement (6) comprenant au moins deux couches de mélanges élastomériques (61, 62) radialement superposées, une première couche (61) formant la partie radialement extérieure de la bande de roulement (6), étant constituée d'un premier mélange élastomérique et étant présente radialement à l'intérieur desdites au moins deux rainures (3) sur une épaisseur mesurée selon la direction radiale supérieure ou égale à 1 mm, une deuxième couche (62) radialement intérieure et au contact de ladite première couche (61) étant constituée d'une partie centrale (621) et de deux parties axialement extérieures (622), ladite partie centrale (621) présentant une largeur axiale comprise entre les extrémités de ladite au moins une couche d'éléments de renforcement (51, 52, 53) de l'armature de sommet (5), ladite partie centrale (621) étant constituée, au moins localement radialement à l'intérieur desdites au moins deux rainures (3) d'un deuxième mélange élastomérique présentant une valeur maximale de tan(δ), noté tan(δ)max, inférieure ou égale à 0.30, l'épaisseur mesurée selon la direction radiale de ladite partie centrale (621) étant supérieure ou égale à 1 mm radialement à l'intérieur desdites au moins deux rainures (3), lesdites deux parties axialement extérieures (622) de la deuxième couche (62) étant constituées d'un troisième mélange élastomérique présentant une valeur maximale de tan(δ), noté tan(δ)max, inférieure à 0.10 **caractérisé en ce que** le premier mélange élastomérique présente un module d'élasticité sous tension à 10 % d'allongement inférieur ou égal à 10 MPa, et **en ce que** le deuxième mélange élastomérique présente un module d'élasticité sous tension à 10 % d'allongement supérieur ou égal à 20 MPa,
la mesure du facteur de perte tan(δ) étant effectuée selon la norme ASTM D 5992-96 à une fréquence de 10Hz et à une température de 60°C,
la mesure du module d'élasticité étant effectuée en traction selon la norme AFNOR-NFT-46002 de septembre 1988 dans les conditions normales de température et d'hygrométrie selon la norme AFNOR-NFT-40101 de décembre 1979.

2. Pneumatique (1) selon la revendication 1, **caractérisé en ce que** la première couche (61) formant la partie radialement extérieure de la bande de roulement présente, radialement à l'intérieur desdites au moins deux rainures (3), une épaisseur mesurée selon la direction radiale supérieure ou égale à 2 mm.

3. Pneumatique (1) selon la revendication 1 ou 2, **caractérisé en ce que** le deuxième mélange élastomérique présente un module d'élasticité sous tension à 10 % d'allongement supérieur ou égal à 28 MPa.

4. Pneumatique (1) selon l'une des revendications 1 à 3, **caractérisé en ce que** le deuxième mélange élastomérique présente une valeur maximale de tan(δ), noté tan(δ)max, inférieure ou égale à 0.20.

5. Pneumatique (1) selon l'une des revendications 1 à 4, **caractérisé en ce que** l'épaisseur mesurée selon la direction radiale de ladite partie centrale (621) de ladite deuxième couche (62) de la bande de roulement (6) est supérieure ou égale à 2 mm radialement à l'intérieur desdites au moins deux rainures (3).

6. Pneumatique (1) selon l'une des revendications 1 à 5, **caractérisé en ce que** ladite partie centrale (621) de ladite deuxième couche (62) de la bande de roulement (6) est constituée du deuxième mélange élastomérique.

7. Pneumatique (1) selon l'une des revendications 1 à 6, l'armature de sommet (5) comportant au moins deux couches d'éléments de renforcement (52, 53), couplées sur au moins une partie de leur longueur selon la direction axiale, **caractérisé en ce que** ladite partie centrale (621) présente une largeur axiale L comprise entre les extrémités de la zone de couplage desdites au moins deux couches d'éléments de renforcement (52, 53).

8. Pneumatique (1) selon l'une des revendications précédentes, **caractérisé en ce que** l'armature de sommet (5) est formée d'au moins deux couches de sommet de travail d'éléments de renforcement (52, 53), de préférence inextensibles, croisés d'une couche à l'autre en faisant avec la direction circonférentielle des angles compris entre 10° et 45°.

9. Pneumatique (1) selon l'une des revendications précédentes, **caractérisé en ce que** l'armature de sommet (5) comporte au moins une couche d'éléments de renforcement circonférentiels.

10. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

11. Pneumatique (1) selon l'une des revendications précédentes, **caractérisé en ce que** l'armature de sommet (5) comporte en outre une couche de triangulation (51) formée d'éléments de renforcement métalliques faisant avec la direction circonférentielle des angles supérieurs à 45°.

## Patentansprüche

1. Reifen (1), welcher eine Scheitelbewehrung (5) umfasst, die wenigstens eine Schicht von Verstärkungselementen (51, 52, 53) aufweist und ihrerseits radial von einem Laufstreifen (6) bedeckt ist, dessen Profil wenigstens zwei Umfangsrillen (3) aufweist und der über zwei Seitenwände mit zwei Wülsten verbunden ist, wobei der Laufstreifen (6) wenigstens zwei radial übereinander angeordnete Schichten von Elastomermischungen (61, 62) umfasst, wobei eine erste Schicht (61), die den radial äußeren Teil des Laufstreifens (6) bildet, aus einer ersten Elastomermischung besteht und radial innerhalb der wenigstens zwei Rillen (3) auf einer in der radialen Richtung gemessenen Dicke vorhanden ist, die größer oder gleich 1 mm ist, wobei eine zweite Schicht (62), die sich radial innerhalb der ersten Schicht (61) und in Kontakt mit dieser befindet, aus einem mittleren Teil (621) und zwei axial äußeren Teilen (622) besteht, wobei der mittlere Teil (621) eine axiale Breite aufweist, die sich zwischen den Enden der wenigstens einen Schicht von Verstärkungselementen (51, 52, 53) der Scheitelbewehrung (5) befindet, wobei der mittlere Teil (621) wenigstens lokal radial innerhalb der wenigstens zwei Rillen (3) aus einer zweiten Elastomermischung besteht, die einen maximalen Wert von tan(δ) aufweist, mit tan(δ)max bezeichnet, der kleiner oder gleich 0,30 ist, wobei die in der radialen Richtung gemessene Dicke des mittleren Teils (621) radial innerhalb der wenigstens zwei Rillen (3) größer oder gleich 1 mm ist, wobei die zwei axial äußeren Teile (622) der zweiten Schicht (62) aus einer dritten Elastomermischung bestehen, die einen maximalen Wert von tan(δ) aufweist, mit tan(δ)max bezeichnet, der kleiner als 0,10 ist, **dadurch gekennzeichnet, dass** die erste Elastomermischung einen Elastizitätsmodul unter Spannung bei 10 % Dehnung aufweist, der kleiner oder gleich 10 MPa ist, und dadurch, dass die zweite Elastomermischung einen Elastizitätsmodul unter Spannung bei 10 % Dehnung aufweist, der größer oder gleich 20 MPa ist,
wobei die Messung des Verlustfaktors tan(δ) gemäß der Norm ASTM D 5992-96 bei einer Frequenz von 10 Hz und bei einer Temperatur von 60 °C durchgeführt wird,
wobei die Messung des Elastizitätsmoduls im Zugversuch gemäß der Norm AFNOR-NFT-46002 vom September 1988 und unter Normbedingungen für Temperatur und Feuchtigkeit gemäß der Norm AFNOR-NFT-40101 vom Dezember 1979 durchgeführt wird.

2. Reifen (1) nach Anspruch 1, **dadurch gekennzeichnet, dass** die erste Schicht (61), die den radial äußeren Teil des Laufstreifens bildet, radial innerhalb der wenigstens zwei Rillen (3) eine in der radialen Richtung gemessenen Dicke aufweist, die größer oder gleich 2 mm ist.

3. Reifen (1) nach Anspruch 1 oder 2, **dadurch gekennzeichnet, dass** die zweite Elastomermischung einen Elastizitätsmodul unter Spannung bei 10 % Dehnung aufweist, der größer oder gleich 28 MPa ist.

4. Reifen (1) nach einem der Ansprüche 1 bis 3, **dadurch gekennzeichnet, dass** die zweite Elastomermischung einen maximalen Wert von tan(δ) aufweist, mit tan(δ)max bezeichnet, der kleiner oder gleich 0,20 ist.

5. Reifen (1) nach einem der Ansprüche 1 bis 4, **dadurch gekennzeichnet, dass** die in der radialen Richtung gemessene Dicke des mittleren Teils (621) der zweiten Schicht (62) des Laufstreifens (6) radial innerhalb der wenigstens zwei Rillen (3) größer oder gleich 2 mm ist.

6. Reifen (1) nach einem der Ansprüche 1 bis 5, **dadurch gekennzeichnet, dass** der mittlere Teil (621) der zweiten Schicht (62) des Laufstreifens (6) aus der zweiten Elastomermischung besteht.

7. Reifen (1) nach einem der Ansprüche 1 bis 6, wobei die Scheitelbewehrung (5) wenigstens zwei Schichten von Verstärkungselementen (52, 53) aufweist, die auf wenigstens einem Teil ihrer Länge in der axialen Richtung gekoppelt sind, **dadurch gekennzeichnet, dass** der mittlere Teil (621) eine axiale Breite L zwischen den Enden des Kopplungsbereichs der wenigstens zwei Schichten von Verstärkungselementen (52, 53) aufweist.

8. Reifen (1) nach einem der vorhergehenden Ansprüche, **dadurch gekennzeichnet, dass** die Scheitelbewehrung (5) von wenigstens zwei Arbeitsscheitelschichten von vorzugsweise nicht dehnbaren Verstärkungselementen (52, 53) gebildet wird, die sich von einer Schicht zur anderen überkreuzen und mit der Umfangsrichtung Winkel zwischen 10° und 45° bilden.

9. Reifen (1) nach einem der vorhergehenden Ansprüche, **dadurch gekennzeichnet, dass** die Scheitelbewehrung (5) wenigstens eine Schicht von umlaufenden Verstärkungselementen aufweist.

10. Reifen (1) nach einem der vorhergehenden Ansprüche, **dadurch gekennzeichnet, dass** die Scheitelbewehrung (5) radial außen durch wenigstens eine zusätzliche Lage, Schutzlage genannt, von sogenannten elastischen Verstärkungselementen ergänzt wird, die in Bezug auf die Umfangsrichtung unter einem Winkel zwischen 10° und 45° und in derselben Richtung wie der Winkel ausgerichtet sind, der von den nicht dehnbaren Elementen der Arbeitslage gebildet wird, welche ihr radial benachbart ist.

11. Reifen (1) nach einem der vorhergehenden Ansprüche, **dadurch gekennzeichnet, dass** die Scheitelbewehrung (5) außerdem eine Triangulationsschicht (51) aufweist, die von metallischen Verstärkungselementen gebildet wird, die mit der Umfangsrichtung Winkel bilden, die größer als 45° sind.

## Claims

1. Tyre (1) comprising a crown reinforcement (5) comprising at least one layer of reinforcing elements (51, 52, 53), itself radially capped with a tread (6), the tread pattern of which comprises at least two circumferential grooves (3), joined to two beads via two sidewalls, said tread (6) comprising at least two radially superposed layers of elastomeric compounds (61, 62), a first layer (61) forming the radially outer part of the tread (6) consisting of a first elastomeric compound and being present radially inside said at least two grooves (3) over a thickness measured in the radial direction of greater than or equal to 1 mm, a second radially interior layer (62) in contact with said first layer (61) consisting of a central part (621) and two axially outer parts (622), said central part (621) having an axial width between the ends of said at least one layer of reinforcing elements (51, 52, 53) of the crown reinforcement (3), said central part (621) consisting, at least locally radially inside said at least two grooves (3), of a second elastomeric compound having a maximum value of tan(δ), denoted tan(δ)max, of less than or equal to 0.30, the thickness measured in the radial direction of said central part (621) being greater than or equal to 1 mm radially inside said at least two grooves (3), said two axially outer parts (622) of the second layer (62) consisting of a third elastomeric compound having a maximum value of tan(δ), denoted tan(δ)max, of less than 0.10, **characterized** the first elastomeric compound has a tensile elastic modulus at 10% elongation of less than or equal to 10 MPa, and **in that** the second elastomeric compound has a tensile elastic modulus at 10% elongation of greater than or equal to 20 MPa, the measure of tan(δ) being realized according to standard ASTM D 5992-96 at a frequency of 10 Hz and at a temperature of 60°C, the measure of the tensile elastic modulus being realized under tension in accordance with standard AFNOR-NFT-46002 of September 1988 at normal temperature and relative humidity conditions in accordance with standard AFNOR-NFT-40101 of December 1979.

2. Tyre (1) according to Claim 1, **characterized in that** the first layer (61) forming the radially outer part of the tread has, radially inside said at least two grooves (3), a thickness measured in the radial direction of greater than or equal to 2 mm.

3. Tyre (1) according to Claim 1 or 2, **characterized in that** the second elastomeric compound has a tensile elastic modulus at 10% elongation of greater than or equal to 28 MPa.

4. Tyre (1) according to one of Claims 1 to 3, **characterized in that** the second elastomeric compound has a maximum value of tan(δ), denoted tan(δ)max, of less than or equal to 0.20.

5. Tyre (1) according to one of Claims 1 to 4, **characterized in that** the thickness measured in the radial direction of said central part (621) of said second layer (62) of the tread (6) is greater than or equal to 2 mm radially inside said at least two grooves (3).

6. Tyre (1) according to one of Claims 1 to 5, **characterized in that** said central part (621) of said second layer (62) of the tread (6) consists of the second elastomeric compound.

7. Tyre (1) according to one of Claims 1 to 6, the crown reinforcement (5) comprising at least two layers of reinforcing elements (52, 53), coupled over at least a portion of their length in the axial direction, **characterized in that** said central part (621) has an axial width L between the ends of the coupling zone of said at least two reinforcing elements (52, 53).

8. Tyre (1) according to one of the preceding claims, **characterized in that** the crown reinforcement (5) is formed of at least two working crown layers of reinforcing elements (52, 53), preferably inextensible, crossed from one layer to the other, forming, with the circumferential direction, angles of between 10° and 45°.

9. Tyre (1) according to one of the preceding claims, **characterized in that** the crown reinforcement (5) comprises at least one layer of circumferential reinforcing elements.

10. Tyre (1) according to one of the preceding claims, **characterized in that** the crown reinforcement (5) is supplemented radially on the outside by at least one additional ply, referred to as a protective ply, of reinforcing elements, referred to as elastic reinforcing elements, that are oriented relative to the circumferential direction at an angle of between 10° and 45° and in the same direction as the angle formed by the inextensible elements of the working ply which is radially adjacent thereto.

11. Tyre (1) according to one of the preceding claims, **characterized in that** the crown reinforcement (5) also comprises a triangulation layer (51) formed of metal reinforcing elements forming angles of greater than 45° with the circumferential direction.
